Europäisches Patentamt

**European Patent Office**

**Office européen des brevets**

(19)

(11) Numéro de publication: **0 114 423**
**B1**

(12)

# FASCICULE DE BREVET EUROPEEN

(45) Date de publication du fascicule du brevet:
09.04.86

(51) Int. Cl.⁴: **H 04 M 1/272**

(21) Numéro de dépôt: **83201699.2**

(22) Date de dépôt: **01.12.83**

(54) Procédé de réalisation d'une interruption de renumérotation infinie et application à un dispositif de renumérotation semi-automatique.

(30) Priorité: **08.12.82 FR 8220553**

(43) Date de publication de la demande:
**01.08.84 Bulletin 84/31**

(45) Mention de la délivrance du brevet:
**09.04.86 Bulletin 86/15**

(84) Etats contractants désignés:
**DE FR GB SE**

(56) Documents cités:
**DE - A - 2 936 575**

(73) Titulaire: **R.T.C. LA RADIOTECHNIQUE-COMPELEC Société anonyme dite:, 51 rue Carnot, F-92150 Suresnes(Hauts-de-Seine) (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **DE GB SE**

(72) Inventeur: **Prelaz, Jean-Claude, Société Civile S.P.I.D. 209, rue de l'Université, F-75007 Paris (FR)**
Inventeur: **Queudot, Paul, Société Civile S.P.I.D. 209, rue de l'Université, F-75007 Paris (FR)**

(74) Mandataire: **Chaffraix, Jean et al, Société Civile S.P.I.D. 209, rue de l'Université, F-75007 Paris (FR)**

LIBER, STOCKHOLM 1986

# Description

La présente invention concerne un procédé de réalisation d'une interruption de renumérotation de durée infinie à partir d'un circuit de numérotation à boucle d'interruption de renumérotation du durée finie, circuit présentant, notamment, une première borne d'alimentation reliée à un premier potentiel supérieur a une valeur de seuil donnée, une deuxième borne d'alimentation reliée à un deuxième potentiel, négatif par rapport au premier potentiel, une borne de sortie délivrant, pendant ladite durée finie d'interruption et lorsqu'un ordre d'interruption est émis par une mémoire du circuit, une tension d'interruption également supérieure à la valeur de seuil et une borne d'entrée qui interrompt effectivement la renumérotation lorsque ladite tension d'interruption lui est appliquée, la caractéristique courant-tension de ladite borne d'entrée étant telle que le courant croît continûment pour des valeurs de tensions comprises entre zéro et ladite valeur de seuil donnée, et est quasi nul pour des tensions supérieures à cette valeur de seuil. Elle concerne également une application du procédé selon l'invention à un dispositif de renumérotation semi-automatique à durée d'interruption commandée.

L'invention s'applique de façon très avantageuse au domaine de la téléphonie.

Dans la suite de ce mémoire, on entendra par le terme de "durée infinie" une durée grande par rapport à ladite durée finie d'interruption de renumérotation, intrinsèque audit circuit de numérotation à boucle d'interruption de renumérotation. Par exemple, sera considérée comme infinie une durée d'interruption de l'ordre de 10 fois la durée finie d'interruption du circuit de numérotation.

Les circuits de numérotation à boucle d'interruption de renumérotation de durée finie, comme celui commercialisé par la Société R.T.C. La Radiotechnique-Compelec sous la dénomination PCD 3323, offre la possibilité à l'utilisateur de renuméroter automatiquement un numéro d'appel déjà composé et conservé dans une mémoire. Dans les cas où le numéro d'appel exige à un moment donné l'obtention d'une tonalité, par exemple après l'indicatif d'appel en province ou à l'étranger, il est prévu dans ces circuits une interruption automatique de renumérotation de durée finie qui peut être de l'ordre de quelques secondes. Quand le délai correspondant à cette durée finie s'est écoulé, la renumérotation se poursuit jusqu'à épuisement du numéro d'appel. Dans l'exemple du circuit PCD 3323 susnommé, lorsqu'un ordre d'interruption est émis par une mémoire du circuit, un signal d'interruption apparaît à une borne de sortie, pendant la durée finie d'interruption, sous la forme d'une tension continue. Une borne d'entrée est susceptible de recevoir le signal d'interruption et de commander effectivement l'interruption de renumérotation. Pour réaliser pratiquement cette interruption de renumérotation, il suffit de connecter les bornes d'entrée et de sortie.

Il peut se produire, afin d'éviter par exemple une reprise de la renumérotation avant d'avoir obtenu la tonalité, que l'on désire pouvoir donner manuellement l'ordre d'achever la renumérotation en réalisant un dispositif de renumérotation semi automatique. Pour cela il faut, d'une part, pouvoir maintenir l'interruption pendant une durée infinie, puis, d'autre part, pouvoir arrêter l'interruption afin de reprendre la renumérotation. La présente invention a précisément pour objet de réaliser ces deux fonctions, en mettant à profit la caractéristique courant-tension particulière à la borne d'entrée du circuit PCD 3323.

En effet, selon la présente invention, un procédé de réalisation d'une interruption de renumérotation de durée infinie à partir d'un circuit de numérotation à boucle d'interruption de renumérotation de durée finie, circuit présentant, notamment, une première borne d'alimentation reliée à un premier potentiel supérieur à une valeur de seuil donnée, une deuxième borne d'alimentation reliée à un deuxième potentiel, négatif par rapport au premier potentiel, une borne de sortie délivrant, pendant ladite durée finie d'interruption et lorsqu'un ordre d'interruption est émis par une mémoire du circuit, une tension d'interruption également supérieure à la valeur de seuil et une borne d'entrée qui interrompt effectivement la renumérotation lorsque ladite tension d'interruption lui est appliquée, la caractéristique courant-tension de ladite borne d'entrée étant telle que le courant croît continûment pour des valeurs de tensions comprises entre zéro et ladite valeur de seuil donnée, et est quasi nul pour des tensions supérieures à cette valeur de seuil, est notamment remarquable en ce qu'on dispose entre ladite borne de sortie et ladite borne d'entrée un élément conducteur unidirectionnel dont le sens passant va de la borne de sortie à la borne d'entrée, et en ce qu'on relie la borne d'entrée à des moyens de maintien de la tension de la borne d'entrée à une valeur supérieure à la valeur de seuil lorsqu'après écoulement de ladite durée finie d'interruption, la borne de sortie ne délivre plus ladite tension d'interruption.

Nous expliquerons plus tard, en détail, le fonctionnement de l'invention qui permet de réaliser une durée d'interruption infinie à partir de la durée finie fournie par le circuit. Disposant d'une interruption infinie, il est alors possible d'envisager d'appliquer le procédé selon l'invention à la réalisation d'un dispositif de renumérotation semi-automatique. En effet, une application du procédé selon l'invention à un dispositif de renumérotation semi-automatique à durée d'interruption commandée, est principalement remarquable en ce qu'on dispose des moyens interrupteurs entre la borne d'entrée et la deuxième borne d'alimentation, ces moyens interrupteurs étant en position ouverte pendant toute la durée désirée pour l'interruption de renumérotation et amenés manuellement en position fermée lorsque l'on désire continuer la renumérotation.

La descrption qui va suivre en regard des dessins annexés, donnés à titre d'exemples non limitatifs, fera bien comprendre en quoi consiste l'invention et comment elle peut être réalisée.

La figure 1 donne le schéma d'un premier mode de mise en oeuvre du procédé selon l'invention.

La figure 2 montre l'allure du signal sur la borne de sortie du circuit de numérotation à boucle d'interruption de renumérotation de durée finie.

La figure 3 donne la caractéristique courant-tension de la borne d'entrée dudit circuit de numérotation ainsi que la droite de charge correspondant au schéma de la figure 1.

La figure 4 donne le schéma d'un deuxième mode de mise en oeuvre du procédé selon l'invention.

La figure 5 donne le schéma d'une application de l'invention à un dispositif de renumérotation semi-automatique à durée d'interruption commandée.

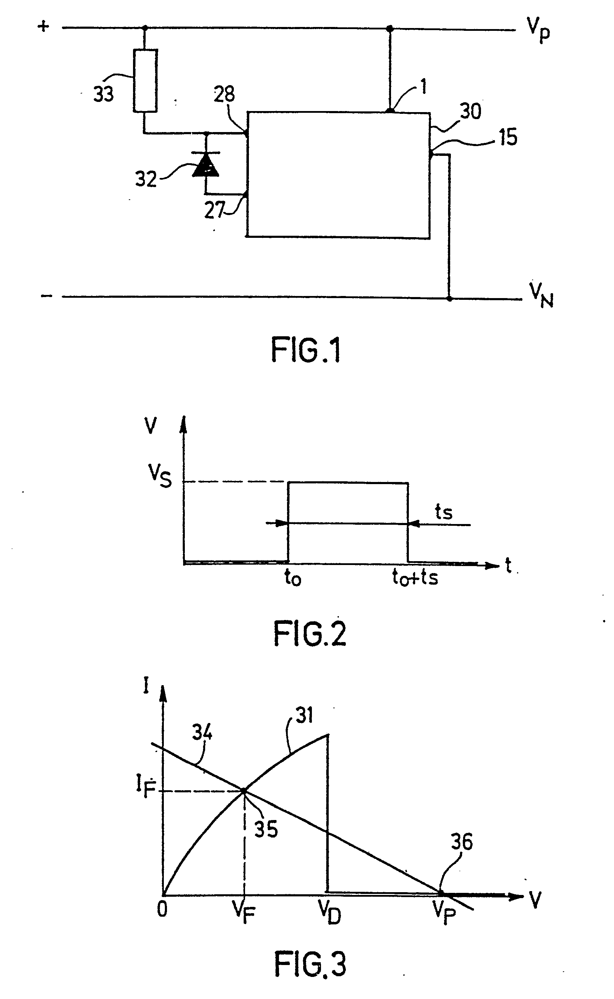

La figure 1 représente le schéma d'un circuit 30 de numérotation à boucle d'interruption de renumérotation de durée finie $t_s$. Ce circuit 30, par exemple le circuit PCD 3323 commercialisé par la Radiotechnique-Compelec, présente notamment une première borne 1 d'alimentation reliée à un premier potentiel $V_P$ supérieur à une valeur $V_D$ de seuil donnée, une deuxième borne 15 d'alimentation reliée à un deuxième potentiel $V_N$, négatif par rapport au premier potentiel $V_P$. Ainsi que le montre la figure 2, une borne de sortie 27 du circuit 30 délivre, pendant ladite durée finie $t_s$ d'interruption et lorsqu'un ordre d'interruption est émis par une mémoire du circuit 30, une tension $V_S$ d'interruption également supérieure à la valeur $V_D$ de seuil. Une borne d'entrée 28 interrompt effectivement la renumérotation lorsque ladite tension $V_S$ d'interruption lui est appliquée. La figure 3 montre la caractéristique 31 courant-tension de la borne d'entrée 28. Comme on peut le voir à la figure 3, le courant I croît continûment pour des valeurs de la tension V comprises entre zéro et la valeur $V_D$ de seuil, et est quasi nul pour des tensions supérieures à cette valeur de seuil. La tension $V_D$ joue le rôle de seuil logique pour la borne d'entrée 28: si la tension qui lui est appliquée est inférieure à $V_D$, aucun signal d'interruption n'est transmis par cette borne, et si la tension appliquée est supérieure à $V_D$, la borne d'entrée 28 transmet au circuit 30 un signal d'interruption. En cablage simple, la borne d'entrée 28 est directement connectée à la borne de sortie 27, de sorte que, si à un instant $t_o$ la mémoire du circuit 30 émet un ordre d'interruption, la tension à la borne de sortie 27, et donc à la borne d'entrée 28, passe de zéro à $V_S$. Et comme $V_S$ est supérieure à $V_D$, l'ordre d'interruption est transmis au circuit pendant toute la durée finie $t_s$. Si l'on veut obtenir à partir de la tension $V_S$ d'interruption de durée finie $t_s$, un signal d'interruption de durée infinie au niveau de la borne d'entrée 28, il est avantageux, comme le montre la figure 1, de disposer entre ladite borne de sortie 27 et ladite borne d'entrée 28 un élément conducteur unidirectionnel 32 dont le sens passant va de la borne de sortie à la borne d'entrée. Dans les schémas représentés aux figures 1, 4 et 5, cet élément conducteur unidirectionnel 32 est une diode. De plus, on doit relier la borne d'entrée 28 à des moyens de maintien de la tension V de la borne d'entrée à une valeur supérieure à ladite valeur de seuil $V_D$ lorsqu'après que se soit écoulée la durée finie $t_s$ d'interruption, la borne de sortie 27 ne délivre plus ladite tension $V_S$ d'interruption.

Dans le premier mode de mise en oeuvre de l'invention représenté à la figure 1, lesdits moyens de maintien de la tension V de la borne d'entrée 28 à une valeur supérieure à la tension de seuil $V_D$ sont constitués par une résistance 33 placée entre ladite borne d'entrée 28 et la première borne 1 d'alimentation. Ainsi, la résistance 33 détermine, sur le diagramme courant-tension de la figure 3, une droite de charge 34 qui, si la résistance 33 est suffisamment grande, définit, par intersection avec la caractéristique 31, deux points 35, 36 de fonctionnement stables au niveau de la borne d'entrée 28. A la mise sous tension du circuit, et tant que la tension à la borne de sortie 27 est nulle, la borne d'entrée 28 se place au point 35 de fonctionnement, c'est à dire que le potentiel à la borne d'entrée est $V_F$ et que le courant dans la résistance 33 est $I_F$. Comme $V_F$ est inférieur à $V_D$, la borne d'entrée 28 ne transmet au circuit 30 aucun signal d'interruption de renumérotation. Quand, à l'instant $t_o$, la tension délivrée par la borne de sortie 27 passe de O à $V_S$, supérieure à $V_D$, le point de fonctionnement stable de la borne d'entrée 28 est le point 36: le courant dans la résistance est quasi nul et le potentiel à la borne d'entrée est le potentiel $V_P$ d'alimentation. Comme $V_P$ est supérieur à $V_D$, la borne d'entrée 28 transmet au circuit 30 un signal d'interruption de renumérotation. Lorsqu'à l'instant $t_o+t_s$ la tension fournie par la borne de sortie 27 repasse à zéro, la borne d'entrée 28 est maintenue au point de fonctionnement 36, c'est à dire qu'elle continue, pendant une durée illimitée de principé, de fournir au circuit 30 un signal d'interruption de renumérotation. Des valeurs typiques de fonctionnement dans le cas du circuit PCD 3323 sont $V_P=3V$, $V_N=0$, $V_D=1,3V$, résistance $33=2,2$ MΩ.

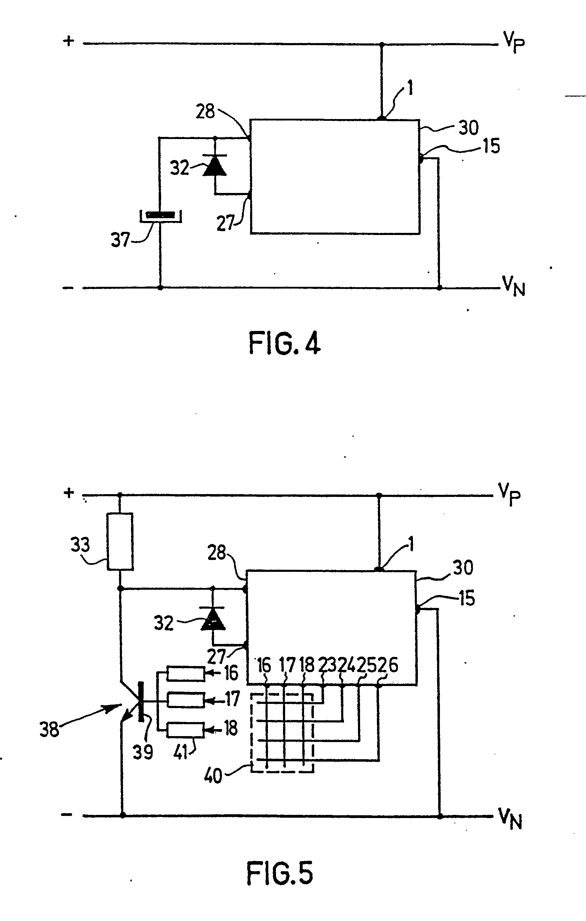

La figure 4 montre un deuxième mode de mise en oeuvre de l'invention dans lequel les moyens de maintien de la tension V de la borne d'entrée 28 à une valeur supérieure à la tension de seuil $V_D$ sont constitués par un condensateur 37 placé entre ladite borne d'entrée 28 et la deuxième borne 15 d'alimentation. Ainsi, lors de la mise en service du circuit et tant que la tension à la borne de sortie 27 est nulle, la tension à la borne d'entrée 28 est également nulle et ladite borne d'entrée ne fournit aucun signal d'interruption de renumérotation. Lorsqu'à l'instant $t_o$, la tension délivrée par la borne de sortie 27 prend la valeur $V_S$, la tension à la borne d'entrée 28 prend une

valeur $V_s-V_d$ sensiblement égale, à la valeur de tension directe $V_d$ de la diode 32 près. Si $V_s-V_d$ est supérieure à $V_D$, la borne d'entrée 28 délivre alors au circuit 30 un signal d'interruption de renumérotation, et le condensateur 37 se charge sous cette tension $V_s-V_d$. A l'instant $t_o+t_s$, quand la tension à la borne de sortie 27 s'annule, le potentiel à la borne d'entrée 28 est maintenu à la valeur $V_s-V_d$ par le condensateur 37 pendant une durée en principe illimitée. En pratique, à cause des fuites de courant inévitables, le condensateur 37 se décharge lentement à travers le circuit ou à travers lui-même de sortie qu'à un certain moment la tension à la borne d'entrée 28 devient inférieure à $V_D$ et la renumérotation automatique est poursuivie. Cependant, la Demanderesse a montré expérimentalement qu'avec un circuit PCD 3323, une tension $V_s$ de 3 volts environ et une tension de seuil $V_D$ de 1,3 V une interruption de renumérotation de 30 secondes pouvait être obtenue à 25°C avec un condensateur de 3,3 F, ce qui représente une durée longue par rapport aux 3 secondes de durée $t_s$ d'interruption automatique fournie par le circuit.

Disposant de moyens pour obtenir une durée infinie, ou très longue, d'interruption de renumérotation à partir d'une durée finie, il est alors possible d'appliquer l'invention à la réalisation d'un dispositif de renumérotation semi-automatique à durée d'interruption commandée. Pour cela, comme le montre la figure 5, on dispose des moyens interrupteurs 38 entre la borne d'entrée 28 et la deuxième borne 15 d'alimentation, ces moyens interrupteurs étant en position ouverte pendant toute la durée désirée pour l'interruption de renumérotation, et amenés manuellement en position fermée lorsque l'on désire continuer la renumérotation. Dans l'exemple de réalisation de la figure 5, lesdits moyens interrupteurs 38 sont constitués par un transistor 39 dont la base est reliée, par l'intermédiaire des résistances 41, à trois colonnes 16, 17, 18 de touches d'un clavier 40 de numérotation à touches. Pendant toute la durée voulue pour l'interruption de renumérotation, le transistor est bloqué et la tension à la borne d'entrée 28 reste à une valeur supérieure à la valeur de seuil $V_D$. Au moment où l'utilisateur désire poursuivre la renumérotation, il appuie sur n'importe quelle touche de clavier 40, cette opération ayant pour but de rendre conducteur le transistor 39. La tension à la borne d'entrée 28 est ainsi abaissée à une valeur inférieure à la valeur de seuil $V_D$ et l'interruption de renumérotation est annulée.

L'invention ne saurait être limitée aux seuls exemples de réalisation montrés aux figures 1, 4 et 5 mettant en oeuvre une diode comme un élément conducteur unidirectionnel et un transistor et des touches de clavier comme moyens interrupteurs. Il est clair que, sans sortir du cadre de l'invention, l'homme de métier pourra utiliser tout autre élément conducteur unidirectionnel et tout autre moyen interrupteur connus.

**Revendications**

1. Procédé de réalisation d'une interruption de renumérotation de durée infinie à partir d'un circuit (30) de numérotation à boucle d'interruption de renumérotation de durée finie $(t_s)$, circuit présentant, notamment, une première borne (1) d'alimentation reliée à un premier potentiel $(V_P)$ supérieur à une valeur de seuil $(V_D)$ donnée, une deuxième borne (15) d'alimentation reliée à un deuxième potentiel $(V_N)$ négatif par rapport au premier potentiel $(V_P)$, une borne de sortie (27) délivrant, pendant ladite durée finie $(t_s)$ d'interruption et lorsqu'un ordre d'interruption est émis par une mémoire du circuit (30), une tension $(V_S)$ d'interruption également supérieure à la valeur $(V_D)$ de seuil et une borne d'entrée (28) qui interrompt effectivement la renumérotation lorsque ladite tension $(V_S)$ d'interruption lui est appliquée, la caractéristique (31) courant-tension de ladite borne d'entrée (28) étant telle que le courant croît continûment pour des valeurs de tensions comprises entre zéro et ladite valeur $(V_D)$ de seuil donnée, et est quasi nul pour des tensions supérieures à cette valeur de seuil, procédé caractérisé en ce qu'on dispose entre ladite borne de sortie (27) et ladite borne d'entrée (28) un élément conducteur unidirectionnel (32) dont le sens passant va de la borne de sortie à la borne d'entrée, et en ce qu'on relie la borne d'entrée (28) à des moyens de maintien de la tension de la borne d'entrée à une valeur supérieure à la valeur $(V_D)$ de seuil lorsqu'après écoulement de ladite durée finie $(t_s)$ d'interruption la borne de sortie (27) ne délivre plus ladite tension $(V_S)$ d'interruption.

2. Procédé selon la revendication 1, caractérisé en ce que lesdits moyens de maintien de la tension de la borne d'entrée (28) sont constitués par une résistance (33) placée entre ladite borne d'entrée (28) et la première borne (1) d'alimentation.

3. Procédé selon la revendication 1, caractérisé en ce que lesdits moyens de maintien de la tension de la borne d'entrée (28) sont constitués par un condensateur (37) placé entre ladite borne d'entrée (28) et la deuxieme borne (15) d'alimentation.

4. Procédé selon l'une quelconque des revendications 1 à 3, caractérisé en ce que ledit élément conducteur unidirectionnel (32) est une diode.

5. Application du procédé selon l'une quelconque des revendications 1 à 4, à un dispositif de renumérotation semi-automatique à durée d'interruption commandée, caractérisée en ce qu'on dispose des moyens interrupteurs (38) entre la borne d'entrée (28) et la deuxième borne (15) d'alimentation, ces moyens interrupteurs (38) étant en position ouverte pendant toute la durée désirée pour l'interruption de renumérotation et amenés manuellement en position fermée lorsque l'on désire continuer la renumérotation.

6. Application selon la revendication 5, caractérisée en ce que lesdits moyens interrupteurs (38) sont constitués par un transistor (39) dont la base est reliée à au moins une touche (16, 17, 18) d'un clavier (40) de numérotation à touches.

**Patentansprüche**

1. Verfahren zur Verwirklichung einer beliebigen Unterbrechung der Rufnummernwiederholung einer Wählschaltung (30) mit einer Wählunterbrechungsschleife, wobei die Unterbrechung eine endliche Länge ($t_s$) hat, wobei die Schaltungsanordnung insbesondere einen ersten Speiseanschluss (1) aufweist, der mit einem ersten Potential ($V_P$) mit einem Wert der höher ist als ein vorbestimmter Schwellenwert ($V_D$) verbunden ist, einen zweiten Speiseanschluss (15), der mit einem zweiten Potential ($V_N$), der gegenüber dem ersten Potential ($V_P$) negativ ist, verbunden ist, einen Ausgangsanschluss (27), der während der genannten endlichen Dauer ($t_s$) der Unterbrechung und wenn ein Unterbrechungsbefehl von einem Speicher der Schaltungs-anordnung (30) übertragen wird, eine Unter-brechungsspannung ($V_S$) liefert, die ebenfalls höher ist als der Schwellenwert ($V_D$) sowie einen Eingangsanschluss (28) aufweist, der auf wirksame Weise den Rufwiederholungsvorgang unterbricht, wenn die genannte Unterbrechungs-spannung ($V_S$) demselben zugeführt wird, wobei die Strom-Spannungskennlinie (31) des genannten Eingangsanschlusses (28) derart ist, dass der Strom kontinuierlich zunimmt für Spannungswerte zwischen Null und dem genannten vorbestimmten Schwellenwert ($V_D$) und nahezu Null ist für Spannungen höher als dieser Schwellenwert, dadurch gekennzeichnet, dass ein in nur einer Richtung leitendes Element (32), dessen Leitungsrichtung von dem Ausgangsanschluss zu dem Eingangsanschluss läuft, zwischen dem genannten Ausgangsanschluss (27) und dem genannten Eingangsanschluss (28) liegt und dass der Eingangsanschluss (28) mit Mitteln zum Beibehalten der Spannung an dem Eingangsanschluss auf einem Wert höher als der Schwellenwert ($V_D$) verbunden ist, da, nachdem die genannte endliche Dauer ($t_s$) der Unterbrechung verstrichen ist, der Ausgangsanschluss (27) nicht länger die genannte Unter-brechungsspannung ($V_S$) liefert.

2. Verfahren nach Anspruch 1, dadurch gekennzeichnet, dass die genannten Mittel zum Beibehalten der Spannung des Eingangsanschlusses (28) aus einem Widerstand (33) bestehen, der zwischen dem genannten Eingangsanschluss (28) und dem ersten Speiseanschluss (1) vorgesehen ist.

3. Verfahren nach Anspruch 1, dadurch gekennzeichnet, dass die genannten Mittel zum Beibehalten der Spannung des Eingangsanschlusses (28) durch einen Kondensator (37) gebildet werden, der zwischen dem genannten Eingangsanschluss (28) und dem zweiten Speiseanschluss (15) vorgesehen ist.

4. Verfahren nach einem der Ansprüche 1 bis 3, dadurch gekennzeichnet, dass das genannte in nur einer Richtung leitende Element (32) eine Diode ist.

5. Anwendung des Verfahrens nach einem der Ansprüche 1 bis 4 bei einer halbautomatischen Nummernwiederholungsanordnung mit gesteuerter Unterbrechungsdauer, dadurch gekennzeichnet, dass Unterbrechermittel (38) zwischen dem Eingangsanschluss (28) und dem zweiten Speiseanschluss (15) vorgesehen sind, wobei diese Unterbrechermittel (38) während der ganzen für die Rufwiederholungsunterbrechung gewünschte Dauer offen sind und von Hand in den geschlossenen Zustand gebracht werden, wenn eine Fortsetzung des Rufwiederholungsvorganges gewünscht wird.

6. Anwendung des Verfahrens nach Anspruch 5, dadurch gekennzeichnet, dass die genannten Unterbrechermittel (38) durch einen Transistor (39) gebildet werden, dessen Basis mit wenigstens einer Drucktaste (16, 17, 18) einer Wähldrucktastatur (40) verbunden ist.

**Claims**

1. A method of effecting a redialling interruption of any optional length starting from a dialling circuit (30) comprising a dialling interrupt loop which interruption has a finite length ($t_s$), the circuit having, particularly a first supply terminal (1) connected to a first potential ($V_P$) of a value higher than a predetermined threshold value ($V_D$), a second supply terminal (15) connected to a second potential ($V_N$) which is negative relative to the first potential ($V_P$), an output terminal (27) supplying during the said finite duration ($t_s$) of the interruption and when an interrupt command is transmitted by a memory of the circuit (30), an interruption voltage ($V_S$) which is also higher than the threshold value ($V_D$), and an input terminal (28) which efficiently interrupts the redialling operation when the said interruption voltage ($V_S$) is applied to it, the current-voltage characteristic (31) of the said input terminal (28) being such that the current increases continuously for voltage values between zero and the said predetermined threshold value ($V_D$), and is almost zero for voltages higher than this threshold value, characterized in that a uni-directionally conducting element (32) whose conducting sense is directed from the output terminal to the input terminal is arranged between the said output terminal (27) and the said input terminal (28) and that the input terminal (28) is connected to means for maintaining the voltage at the input terminal at a value higher than the threshold value ($V_D$) when, after the said finite duration ($t_s$) of the interruption has elapsed, the output terminal (27) no longer supplies the said interruption voltage ($V_S$).

2. A method as claimed in Claim 1, characterized in that the said means for maintaining the voltage of the input terminal (28) are in the form of a resistor (33) arranged between the said input terminal (28) and the first supply terminal (1).

3. A method as claimed in Claim 1, characterized in that the said means for maintaining the voltage of the input terminal (28) are formed by a capacitor (37) arranged between the said input terminal (28) and the second supply terminal (15).

4. A method as claimed in any of the Claims 1 to 3, characterized in that the said uni-directional conducting element (32) is a diode.

5. Applying the method as claimed in any of the Claims 1 to 4, to a semi-automatic redialling arrangement with controlled interrupt duration, characterized in that interruptor means (38) are arranged between the input terminal (28) and the second supply terminal (15), these interruptor means (38) being in the open state during the whole duration desired for the redialling interruption and are adjusted manually to the closed state when a continuation of the redialling operation is desired.

6. The use of the method as claimed in Claim 5, characterized in that the said interruptor means (38) are formed by a transistor (39) whose base is connected to at least one push-button (16, 17, 18) of a push-button dialling keyboard (40).

FIG.1

FIG.2

FIG.3

FIG. 4

FIG.5